# FASCICULE DE BREVET EUROPEEN

(11) **EP 3 087 224 B1**
(45) Date de publication et mention de la délivrance du brevet: **18.07.2018**
(21) Numéro de dépôt: 14821107.1
(22) Date de dépôt: 15.12.2014
(51) Int. Cl.: E02B 3/04, A01K 61/00

(54) **ABRI ARTIFICIEL POUR LA BIODIVERSITE AQUATIQUE**
KÜNSTLICHER UNTERSTAND FÜR AQUATISCHE ARTENVIELFALT
ARTIFICIAL SHELTER FOR AQUATIC BIODIVERSITY

(30) Priorité: 19.12.2013 BE 201300852
(43) Date de publication de la demande: 02.11.2016
(73) Titulaire: Stream And River Consult SPRL, 5363 Emptinne (BE)
(72) Inventeur: DEN DONCKER, Sebastien, 5363 Emptinne (BE)
(74) Mandataire: BiiP cvba
(86) Numéro de dépôt international: PCT/EP2014/077733
(87) Numéro de publication internationale: WO 2015/097008

(56) Documents cités:
- FR-A1- 2 689 533
- FR-A1- 2 971 397
- JP-A- 2005 160 451
- JP-A- 2008 025 119
- JP-B- 3 011 668
- JP-U- S 627 857

## Description

### DOMAINE DE L'INVENTION

L'invention se rapporte à un abri artificiel pour la biodiversité aquatique telle que la faune piscicole, particulièrement indiqué pour le réaménagement du fond de cours d'eau, de plans d'eau et de mer dont le lit aurait été modifié par l'homme, en particulier par addition de parois ou sols en matériaux de construction, par exemple sur les berges de canaux ou de cours d'eau en milieux urbains. L'abri de la présente invention est particulièrement indiqué pour protéger des poissons ou autre faune aquatique de relativement petite taille de prédateurs tels que des poissons de plus grande taille et d'oiseaux, tels que les cormorans qui peuvent décimer la faune aquatique d'une portion de rivière en quelques jours à peine.

### ARRIÈRE-PLAN TECHNOLOGIQUE

De nombreux cours d'eau et fonds de plans d'eau ou de mer ont été modifiés par l'homme, notamment en murant les berges et parfois le lit de ces cours d'eau. Cet aplanissement des surfaces du lit des cours d'eau entraîne la disparition d'abris naturels tels qu'amoncèlements de pierres, trous, surplombs, dans ou sous lesquels les poissons peuvent se cacher des prédateurs tels que des poissons de plus grande taille, des mammifères et surtout des oiseaux tels que les cormorans. Si une colonie d'une centaine de cormorans s'installe au bord d'un cours d'eau canalisé et dénué d'abris, elle peut décimer une partie importante de la population de poissons en quelques jours à peine. Il est donc très important dans le cadre de réaménagement des cours d'eau, de prévoir des abris naturels ou artificiels où les poissons peuvent se réfugier pour se protéger des prédateurs de tous types, en particulier des oiseaux piscivores. Les abris sont également nécessaires aux poissons en cas de crues.

De nombreux abris artificiels pour la biodiversité aquatique ont été proposés. Par exemple, JPH05230814 propose des abris en forme de tôles ondulées de grande taille, comprenant des ouvertures et fixées à une paroi verticale du bord d'un cours d'eau. KR101158549 décrit des blocs de maçonnerie pourvus d'une ouverture semi-circulaire à chaque extrémité frontale du bloc qui, associée avec une ouverture semi-circulaire d'un bloc adjacent forme une ouverture circulaire. De manière analogue, JP2002167729, JP2004011357, CN202073070, KR100566490, etc. décrivent des abris formés d'un bloc en maçonnerie comprenant une paroi frontale pourvue d'une ou plusieurs ouvertures frontales. Les abris du type de ceux décrits dans les documents précédents ont en commun au moins trois désavantages : (a) ils comprennent une dalle plane inférieure formant la base de l'abri qui ne peut que difficilement s'adapter à un sol du fond de rivière, plan d'eau ou mer, qui est par nature irrégulier, (b) les ouvertures frontales sont de dimensions trop grandes, ne permettant souvent pas d'empêcher des prédateurs tels que des cormorans de pénétrer à l'intérieur de l'abris et (c) ils ont tous des formes très carrées ne donnant pas au fond d'eau un aspect naturel, sinon qu'elles renforcent l'aspect artificiel du fond aquatique.

US20110017144, US20090320766, US6089191, JP2004344021, JP2002045079, etc. décrivent des abris comprenant plusieurs plateaux horizontaux reliés entre eux par des colonnes ou cordes verticales formant autant d'étages comprenant chacun un espace de hauteur égale à la distance entre deux plateaux adjacents. L'accès à chacun de ces espaces se fait par des ouvertures .s'étalant sur pratiquement tout le périmètre de chaque plateau et de hauteur aussi égale à la distance entre deux plateaux adjacents. Parfois, le toit comprend également une ouverture de grandes dimensions permettant l'accès aux différents étages. Ces abris n'empêchent généralement pas l'accès aux prédateurs et ne disposent pas d'un espace suffisant pour que la faune qui s'y est réfugiée puisse manoeuvrer à l'aise à l'intérieur de l'abri.

JP3011668 décrit un abri pour la faune aquatique comprenant une ouverture pourvue de colonnes disposées sur une file à intervalles réguliers. Des poissons de taille inférieure à l'espace entre deux colonnes peuvent se protéger de prédateurs plus gros en entrant dans l'abri à travers les colonnes. JP20051 60451 décrit un récif artificiel formé par des tiges contenues verticalement dans un châssis.

WO2006108898 décrit des modules comprenant une base et un toit tous deux de forme hexagonale et séparés l'un de l'autre par six colonnes distribuées sur la périphérie de chaque hexagone et une septième colonne centrale. Les modules peuvent être alignés en nid d'abeilles pour former une vaste chambre à colonnes. Malheureusement, la base plane de ces modules rend difficile un bon alignement des modules sur un sol irrégulier et de plus, à cause des nombreuses colonnes, l'abri ainsi constitué ne comprend pas de chambre de dimensions confortable pour qu'un poisson ou autre animal aquatique puisse s'y trouver à l'aise.

Des observations à l'aide de caméras filmant l'intérieur d'abris ont montré plusieurs points intéressants :
(a) Des poissons ne se fréquentant normalement pas en eau libre cohabitent dans de tels abris ; il a même été observé une cohabitation pacifique entre prédateurs et proies potentielles dans des abris en présence de prédateurs communs aux deux espèces dans la partie non abritée du cours d'eau, tels que des cormorans.
(b) Les poissons ont besoin d'espace suffisant dans l'abri pour pouvoir se mouvoir et surtout se retourner.
(c) Les cormorans sont capables de pénétrer dans des abris ayant des entrées suffisamment grandes pour permettre leur passage.
(d) Les poissons apprécient l'obscurité dans un abri.

Il est clair que les abris à plusieurs étages ou comprenant de nombreuses colonnes cités ci-dessus ne disposent pas d'une chambre de dimensions suffisantes pour que les poissons puissent manoeuvrer à l'aise. Les abris comprenant un bloc avec des ouvertures disposées dans une paroi frontale n'empêchent généralement pas un prédateur tel qu'un cormoran de pénétrer dans l'abri. Il reste donc un besoin dans l'art pour des abris de la biodiversité aquatique permettant une pose aisée et stable sur un sol irrégulier de fond de cours d'eau, plan d'eau, ou mer, disposant d'une chambre sombre et de dimensions suffisantes tout en ayant une ou des ouvertures telles à empêcher la plupart des prédateurs, en particulier des oiseaux piscivores, de pénétrer dans l'abri. La présente invention propose une solution qui réunit les besoins ci-dessus.

### RÉSUMÉ DE L'INVENTION

L'invention est telle que définie dans la revendication principale et des variantes préférées sont définies dans les revendications dépendantes. La présente invention comporte notamment un abri pour la biodiversité aquatique et principalement pour la faune piscicole, comprenant une chambre définissant un volume intérieur et comprenant une ouverture d'entrée définie par des cotés définissant un périmètre ayant une largeur, L1, **caractérisé en ce que,**
- ladite ouverture d'entrée comprend des colonnes parallèles entre elles s'étendant chacune depuis un premier côté du périmètre de l'entrée jusqu'à une extrémité libre de chaque colonne, et arrangées sur une file extérieure et sur une file intérieure, sensiblement parallèles l'une à l'autre et distribuées en quinconce sur toute la largeur, L1 de l'ouverture d'entrée, **en ce que,**
- chaque colonne a une longueur telle que son extrémité libre est à une distance, h, comprise entre 30 et 100 mm d'un côté opposé au premier coté, **et en ce que**
- chaque colonne (4f) arrangée sur la file extérieure est séparée des colonnes (4b) les plus proches arrangées sur la file intérieure d'une distance, dₘᵢₙ, comprise entre 10 et 200 mm.

Dans une variante préférée de l'invention, l'abri comprend
(a) Un toit comprenant une surface extérieure et une surface intérieure, séparées l'une de l'autre par l'épaisseur du toit et comprenant des bords définissant un périmètre de toit, le dit toit étant dépourvu,
   (i) Soit de toute ouverture,
   (ii) Soit de toute ouverture (2o) définie par un périmètre d'ouverture tel que les deux points de ce périmètre d'ouverture les plus éloignés l'un de l'autre définissent un segment de direction, Z1, et comprenant un segment, Z2, normal à la direction Z1 et défini par une paire de points dudit périmètre d'ouverture ayant une longueur supérieure à 50 mm,
(b) Au moins un premier pied et un second pied s'étendant transversalement depuis, respectivement, une première zone et une deuxième zone de la surface intérieure du toit toutes deux adjacentes à un bord d'entrée du toit, le premier et second pieds ayant chacun une base apte à être posée sur un fond du cours d'eau ou plan d'eau et étant séparés l'un de l'autre au niveau de leur base d'une distance, L1, et définissant ainsi une première ouverture d'entrée,
(c) Des colonnes parallèles entre elles s'étendant chacune transversalement depuis une portion dite d'entrée de la surface intérieure du toit adjacente au bord d'entrée jusqu'à une extrémité libre de chaque colonne, et arrangées sur une file extérieure et sur une file intérieure, sensiblement parallèles l'une à l'autre et distribuées en quinconce sur toute la longueur du bord d'entrée entre les premier et second pieds, et dans lequel :
   (i) chaque colonne a une longueur telle que son extrémité libre est à une distance, h, comprise entre 30 et 100 mm du segment imaginaire reliant les bases des premier et deuxième pieds ;
   (ii) Chaque colonne (arrangée sur la file extérieure étant séparée des colonnes les plus proches arrangées sur la file intérieure d'une distance, dₘᵢₙ, comprise entre 10 et 200 mm.

Dans une variante préférée de la présente invention, l'épaisseur du toit au niveau du bord d'entrée et de la première ouverture d'entrée est sensiblement plus élevée que celle de la portion du toit directement adjacente à ceux-ci, formant ainsi une sorte de paroi fermant partiellement l'ouverture d'entrée, donnant accès à une chambre ayant une hauteur confortable et réduisant ainsi la lumière dans ladite chambre.

Il peut être avantageux de monter les colonnes de sorte à ce que la distance, h, séparant chaque colonne du segment imaginaire reliant les bases des premier et deuxième pieds peut être variée afin de l'adapter à la topographie du sol sur lequel l'abri est posé entre le premier et le deuxième pied.

Il est possible de munir un abri selon la présente invention d'un troisième pied définissant avec le deuxième pied une seconde ouverture d'entrée munie de colonnes telles que définies pour la première ouverture d'entrée. Un quatrième et d'avantage de pieds peuvent bien entendu être utilisés, définissant plusieurs ouvertures d'entrée correspondantes, si l'application ou la topographie du terrain le justifient.

Dans un premier mode de réalisation, l'abri est fixé à une paroi transversale, tel qu'un mur. L'abri comprend alors des moyens de fixation aptes à fixer l'abri à ladite paroi transversale artificielle ou non d'un cours d'eau, plan d'eau ou en mer de sorte que la première ouverture soit accessible pour donner accès à la chambre. Si l'abri est fixé à la paroi transversale de sorte que les premier et deuxième pieds soient éloignés de ladite paroi, il est alors avantageux de munir l'abri de panneaux latéraux fixés sur les côtés extérieurs latéraux de l'abri reliant la paroi transversale aux pieds de l'abri, permettant d'obturer au moins partiellement les ouvertures latérales comprises entre la paroi transversale, le toit, le sol et lesdits pieds en fonction de la topologie du sol sur lequel l'abri est posé. Au cas où un abri est exposé à de forts courants, il est avantageux de prévoir une paroi latérale convexe s'étendant transversalement au, et au-delà du bord d'entrée de l'abri jusqu'à une extrémité libre située à une distance telle que l'angle, a, formé par les segments reliant, d'une part, le premier et second pieds et, d'autre part, le premier pied et l'extrémité libre de la paroi latérale est compris entre 8 et 20°, de manière préférée entre 10 et 15°, et où le premier pied est le pied le plus éloigné de la paroi latérale. Une telle paroi latérale convexe a le double avantage, d'une part, de ménager un espace relativement calme dans et juste devant l'abri et, d'autre part, d'éviter l'apport de sédiments devant l'abri qui, en se déposant, peuvent obturer l'ouverture d'entrée.

Dans un second mode de réalisation, l'abri est posé sur le fond d'un cours d'eau ou plan d'eau, éloigné de toute paroi transversale. Dans ce cas, les trois pieds sont répartis à intervalles sensiblement réguliers le long du périmètre du toit, définissant une deuxième et une troisième ouvertures d'entrée entre les deuxième et troisième pieds et entre les troisième et premier pieds, respectivement, chacune des deuxième et troisième ouvertures d'entrée étant munies chacune de colonnes telles que définies pour la première ouverture d'entrée. Il est bien sûr possible de prévoir plus que trois pieds et donc d'ouvertures correspondantes. Il est également possible de munir l'abri de panneaux latéraux fixés entre deux pieds, condamnant ainsi ladite ouverture d'entrée, dans laquelle des colonnes ne sont donc plus nécessaires. Une telle variante peut être intéressante pour diminuer la lumière atteignant l'intérieur de l'abri ou pour le protéger de courants ou turbulences.

Même dans le second mode de réalisation, l'abri est normalement fixé au sol sur lequel il est posé, par exemple au moyen d'une barre à mine enfoncée dans le sol et passant à travers le toit, ou en lestant le toit. Dans certains cas, il est difficile ou il n'est pas désiré de le fixer solidement au sol. Dans ce cas, le risque que l'abri soit retourné par un courant trop fort existe. Il est alors possible de prévoir trois pieds et des colonnes réparties en quinconce sur deux files tels que plus haut, mais s'étendant de la surface extérieure du toit. Dans une telle configuration, l'abri peut se retourner et toujours retomber sur ses pieds et être opérationnel dans un milieu dynamique.

Dans un troisième mode de réalisation, la chambre est définie par une cavité dans une paroi latérale artificielle ou non. La chambre a une ouverture d'entrée sur une surface extérieure de la paroi latérale qui est barrée par les colonnes arrangées telles que discuté plus haut.

La présente invention concerne aussi un assemblage d'un premier et d'au moins un deuxième abris selon tels que définis supra, placés côte-à-côte avec le toit de l'un sensiblement au même niveau que le toit de l'autre et séparés l'un de l'autre par un espace inférieur à 20 mm entre les deux toits. Si les abris sont selon le premier mode de réalisation, i.e., fixés à une paroi transversale et comprenant chacun un bord latéral transversalement orienté par rapport au bord d'entrée, les bords transversaux de chaque abri doit être de géométrie telle que les deux abris peuvent être positionnés côte à côte avec ledit bord latéral du premier abri adjacent audit bord latéral du au moins deuxième abri sans laisser d'espace de plus de 20 mm entre les deux bords latéraux, et avec la première ouverture d'entrée de chacun des abris ayant sensiblement la même orientation.

La présente invention concerne aussi l'utilisation de colonnes afin de limiter physiquement la taille des animaux pouvant pénétrer à l'intérieur d'un abri comprenant une ouverture d'entrée définie par des cotés définissant un périmètre qui une largeur, L1, **caractérisé en ce que,** lesdites colonnes sont parallèles entre elles s'étendant chacune depuis un premier côté du périmètre de l'entrée jusqu'à une extrémité libre de chaque colonne, et arrangées sur une file extérieure et sur une file intérieure sensiblement parallèles l'une à l'autre et distribuées en quinconce sur toute la largeur, L1 de l'ouverture d'entrée, **en ce que,** chaque colonne a une longueur telle que son extrémité libre est à une distance, h, comprise entre 30 et 100 mm d'un coté opposé au premier coté, **et en ce que** chaque colonne arrangée sur la file extérieure est séparée des colonnes les plus proches arrangées sur la file intérieure d'une distance, dₘᵢₙ, comprise entre 10 et 200 mm.

### BRÈVE DESCRIPTION DES FIGURES

Ces aspects ainsi que d'autres aspects de l'invention seront clarifiés dans la description détaillée de modes de réalisation particuliers de l'invention, référence étant faite aux dessins des figures, dans lesquelles :
**Fig.1** représente des vues de face, de dessus et de côté d'une première variante d'abri selon la présente invention.
**Fig.2** représente des vues de face, de dessus et de côté d'une seconde variante d'abri selon la présente invention.
**Fig.3** représente des vues de face, de dessus et de côté d'une troisième variante d'abri selon la présente invention.
**Fig.4** illustre la dimension transverse maximale selon un axe Z2 de toute ouverture se trouvant sur le toit de l'abri.
**Fig.5** illustre une variante préférée d'abri comprenant une paroi concave protégeant l'entée de l'abri du courant et de la sédimentation.
**Fig.6** Représente une (a) première et (b) seconde variantes préférées d'abris à poser à même le sol, ne nécessitant pas la présence d'une paroi transverse.
**Fig.7** Représente un assemblage d'un premier et second abri selon la présente invention fixés à une paroi transversale artificielle d'un cours d'eau, plan d'eau ou mer
**Fig.8** Représente un assemblage d'un premier et second abris selon la présente invention fixés au sol du fond d'un cours d'eau, plan d'eau ou mer.
**Fig.9** Représente deux variantes d'assemblage de plusieurs abris selon la présente invention fixés au sol du fond d'un cours d'eau, plan d'eau ou mer.
**Fig.10** Représente un exemple d'abris dont le volume intérieur est défini par une cavité dans une paroi latérale d'un cours d'eau, plan d'eau ou mer formant une niche dont l'entrée est barrée par des colonnes arrangées selon la présente invention.
**Fig.11** Représente deux variantes de structures permettant de former un abri selon l'invention en profitant d'une niche dans une paroi latérale d'un cours d'eau, plan d'eau ou mer.

### DESCRIPTION DÉTAILLÉE DE MODES DE RÉALISATION PARTICULIERS

La présente invention concerne un abri pour la biodiversité aquatique, en particulier la faune piscicole mais aussi les reptiles, batraciens, mollusques, crustacés, insectes, etc. Dans sa variante basique, un abri selon la présente invention est de conception et de fabrication très simples. Il comprend une chambre (1c) définissant un volume intérieur et comprenant une ouverture d'entrée définie par des cotés définissant un périmètre ayant une largeur, L1. L'ouverture d'entrée comprend des colonnes (4f, 4b) parallèles entre elles s'étendant chacune depuis un premier côté du périmètre de l'entrée jusqu'à une extrémité libre de chaque colonne, et arrangées sur une file extérieure (4f) et sur une file intérieure (4b), sensiblement parallèles l'une à l'autre et distribuées en quinconce sur toute la largeur, L1 de l'ouverture d'entrée. Chaque colonne a une longueur telle que son extrémité libre est à une distance, h, comprise entre 30 et 100 mm d'un côté opposé au premier coté. **Enfin,** chaque colonne (4f) arrangée sur la file extérieure est séparée des colonnes (4b) les plus proches arrangées sur la file intérieure d'une distance, dₘᵢₙ, comprise entre 10 et 200 mm. Telles que représentées sur les Figures, les colonnes sont de préférence droites, mais elles peuvent aussi présenter des courbures, leur donnant ainsi un aspect plus naturel aux colonnes suggérant des racines ou des algues, à condition que la distance, dₘᵢₙ, entre deux colonnes adjacentes soit respectée.

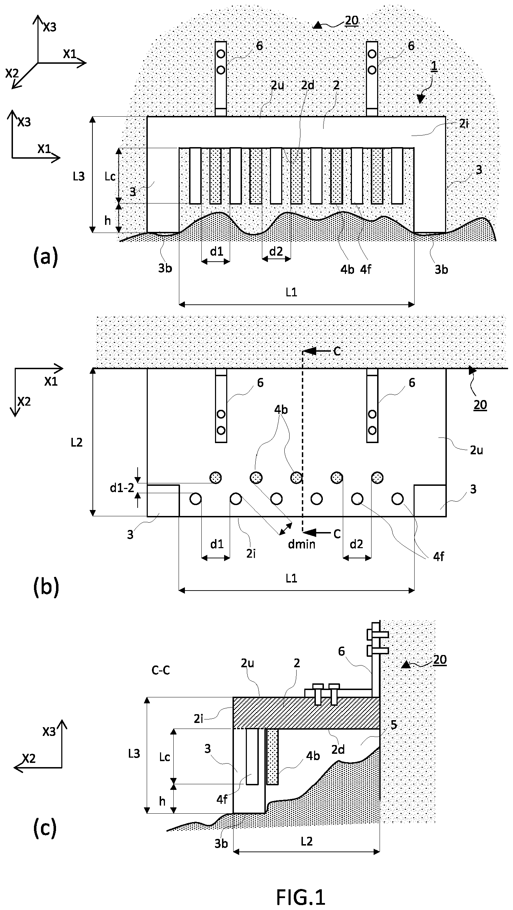

Dans une variante préférée, l'abri est complet et peut être posé tel quel sue un sol ou contre une paroi latéral au fond d'un cours d'eau, plan d'eau, ou mer. Dans cette variante, l'abri de la présente invention comprend (a) un toit (2), (b) au moins deux pieds (3) ayant chacun une base (3b) apte à être posée sur un fond du cours d'eau ou plan d'eau, lesdites bases (3b) étant séparées l'une de l'autre par une distance, L1, définissant ainsi ladite ouverture d'entrée, et (c) des colonnes (4b, 4f) parallèles entre elles et arrangées tel que décrit plus haut. Les Figures 1 à 3 et 6 représentent différentes réalisations préférées de la présente variante de l'invention.

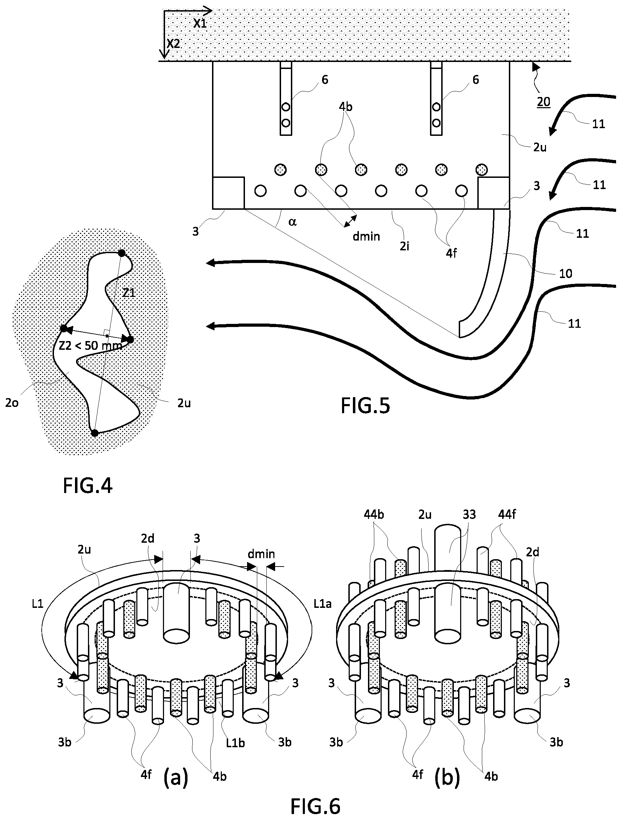

Le toit (2) comprend une surface extérieure (2u) et une surface intérieure (2d), séparées l'une de l'autre par l'épaisseur du toit et comprenant des bords définissant un périmètre de toit. Le toit doit être dépourvu de toute ouverture ou, alternativement, il peut comprendre des ouvertures (2o) à condition qu'elles soient chacune définies par un périmètre d'ouverture tel que les deux points de ce périmètre d'ouverture les plus éloignés l'un de l'autre définissent un segment de direction, Z1, et ne comprenne aucun segment, Z2, normal à la direction Z1 et défini par une paire de points dudit périmètre d'ouverture ayant une longueur supérieure à 50 mm, de préférence supérieure à 30 mm et plus de préférence supérieure à 10 mm (cf. Fig.4). La raison pour ne pas équiper le toit d'ouvertures ou seulement d'ouvertures fines (selon la direction Z2) est double.
(a) Tout d'abord, des ouvertures (2o) dans le toit ne doivent pas permettre à des prédateurs tels que des cormorans ou des poissons de taille plus importante de pénétrer dans l'abri ; avec des ouvertures n'ayant que des segments selon la direction Z2 de longueur inférieure ou égale à 50 mm, de préférence inférieure à 30 mm et plus de préférence inférieure à 10 mm, il est clair que les prédateurs ne peuvent pénétrer dans l'abri par le toit, et
(b) Les poissons et autres animaux se réfugiant dans de tels abris privilégient les abris dans lesquels règne plus d'obscurité. Dans ce cadre il est donc préféré que le toit ne comprenne pas d'ouverture.

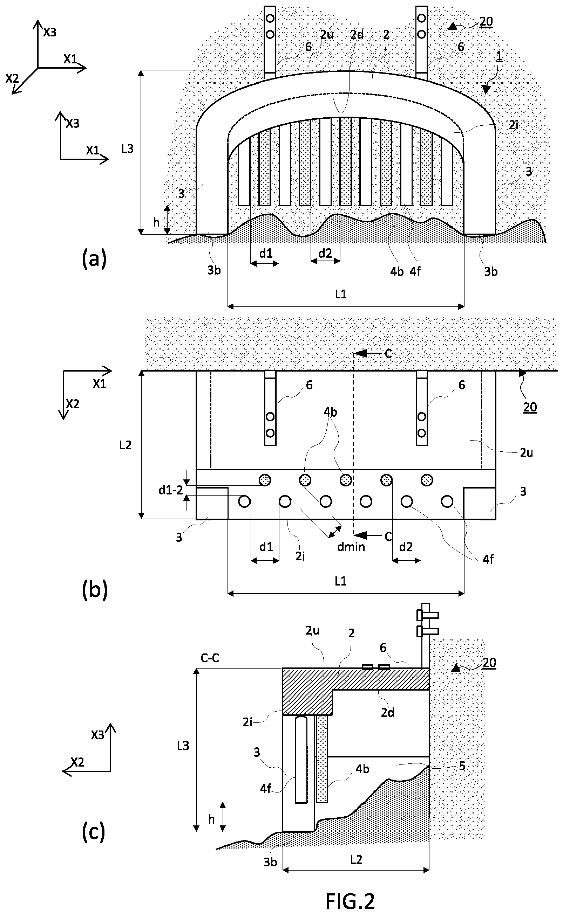

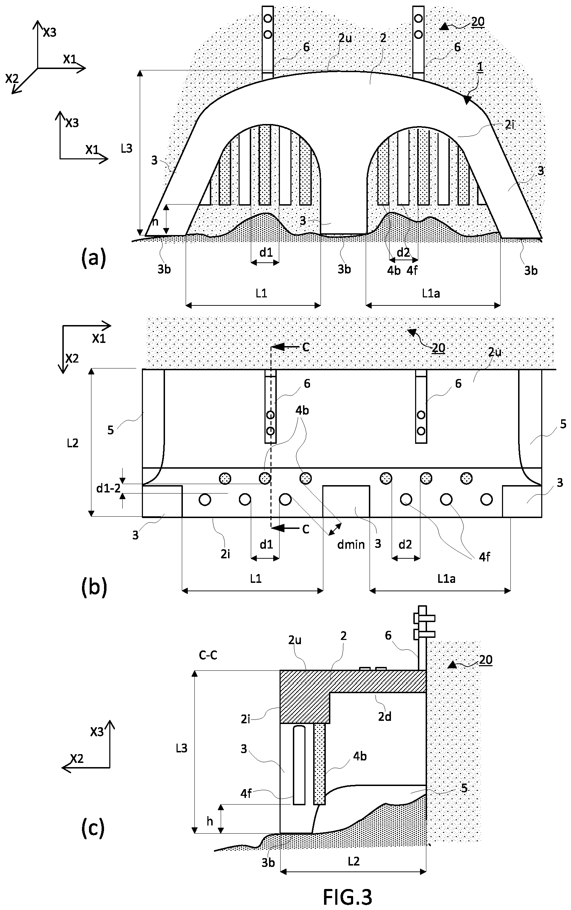

Le toit peut être une dalle plane telle que représentée aux Figures 1, 6 à 9 ou avoir une forme plus complexe tel qu'un dôme tel que représenté aux Figures 2&3 ou une géométrie plus irrégulière afin de lui donner un air plus naturel, ou du moins, moins artificiel. Des petits trous peuvent avantageusement être aménagés à la surface du toit afin de faciliter le développement de plantes aquatiques en laissant les racines pénétrer à l'intérieur de la cache. Dans une variante le toit peut comprendre des parois montantes le long de son périmètre définissant une cavité interne formant un « bac à fleurs » pouvant accommoder soit des charges de lestage, telles que des pierres afin de lester la cache, soit des plantes aquatiques. Enfin, en cas de courants toujours dirigés dans la même direction, l'abri peut avoir une forme hydrodynamique, avec un toit en pente, plus bas en amont et s'élevant vers l'aval.

L'abri (1) comprend au moins un premier pied (3) et un second pied (3) s'étendant transversalement depuis, respectivement, une première zone et une deuxième zone de la surface intérieure (2d) du toit toutes deux adjacentes à un bord d'entrée (2i) du toit, le premier et second pieds ayant chacun une base apte à être posée sur un fond du cours d'eau ou plan d'eau et étant séparées l'une de l'autre par une distance, L1. Les pieds (3) et bord d'entrée (2i) définissent ainsi une première ouverture d'entrée. En introduisant un troisième pied (3) il peut y avoir une seconde ouverture d'entrée, voire même une troisième ouverture d'entrée de longueurs, L1, L1a et L1b, respectivement, tels que représentées aux Figures 3&6. L'accès à l'intérieur de l'abri se fait de préférence uniquement par la ou les ouvertures d'entrée.

Afin de limiter l'accès à l'abris à des espèces de poissons, crustacés et autres de taille généralement réduite et d'empêcher l'accès aux prédateurs principaux tels que des poissons de plus grande taille comme le silure ou le brochet et des oiseaux tels que le cormoran, l'abri comprend de plus des colonnes (4f, 4d) disposées parallèles entre elles sur toute la longueur, L1, de l'ouverture d'entrée entre les premier et second pieds (3) et sur les seconde, troisième et suivantes ouvertures d'entrée s'il y en a. Les colonnes s'étendent chacune transversalement depuis une portion dite d'entrée de la surface intérieure du toit adjacente au bord d'entrée jusqu'à une extrémité libre de chaque colonne. Elles sont arrangées en quinconce sur deux files sensiblement parallèles l'une à l'autre : sur une file extérieure (4f) et sur une file intérieure (4b). Chaque colonne a une longueur telle que son extrémité libre est à une distance, h, comprise entre 30 et 100 mm du segment imaginaire reliant les bases (3b) des premier et deuxième pieds (3). Une distance, h, inférieure à 30 mm rendrait difficile la pose d'un abri sur un terrain irrégulier (cf. Figures 1(a), 2(a) et 3(a)) et une distance, h, supérieure à 100 mm rendrait possible l'accès à l'intérieur de l'abri par certains prédateurs de taille moyenne. Dans une variante préférée, la distance, h, séparant chaque colonne du segment imaginaire reliant les bases des premier et deuxième pieds peut être variée afin de l'adapter à la topographie du sol sur lequel l'abri est posé entre le premier et le deuxième pied. Par exemple, chaque colonne peut être couplée à la surface intérieure (2d) du toit par l'intermédiaire d'un pas de vis et une vis. Alternativement, un système télescopique peut aussi permettre de varier la longueur de chaque colonne et une vis transversale peut permettre de bloquer le coulissement de la colonne à la longueur désirée. Dans ce cas, la distance, h, peut être optimisée pour chaque colonne en fonction de la topographie du terrain sur lequel est posé l'abri.

Afin de limiter physiquement la taille des animaux pouvant pénétrer à l'intérieur de l'abri, chaque colonne (4f) arrangée sur la file extérieure est séparée des colonnes (4b) les plus proches arrangées sur la file intérieure par une distance, dₘᵢₙ, comprise entre 10 et 200 mm, de préférence entre 50 et 175 mm, et de préférence entre 100 et 150 mm. Les deux files sur lesquelles sont disposées les colonnes sont à une distance, d₁₋₂, l'une de l'autre. Les colonnes (4f) disposées sur la file extérieure, la plus proche du bord d'entrée (2i) sont placées à une distance, d1, l'une de l'autre. Il est préféré que la distance, d1, soit sensiblement égale entre toute paire de colonnes adjacentes de la file extérieure. De même, les colonnes (4b) disposées sur la file intérieure, la plus éloignée du bord d'entrée (2i) sont placées à une distance, d2, l'une de l'autre. Il est préféré que la distance, d2, soit sensiblement égale entre toute paire de colonnes adjacentes de la file intérieure. La distance, d1, entre colonnes (4f) de la file extérieure et la distance, d2, entre colonnes (4b) de la file intérieure sont égales ou différentes et sont de manière préférée comprises chacune entre 100 et 250 mm. Dans une variante préférée, d1 = d2 et les colonnes de la file intérieure sont décalées de celles de la file extérieure par une distance, ½ d1. La distance d₁₋₂ entre les files extérieure et intérieure est de préférence inférieure à 200 mm, par exemple entre 50 et 190 mm ou encore entre 80 et 150 mm. Dans le cas d'abris pour animaux de particulièrement petite taille, la distance d₁₋₂ peut même être inférieure à 10 mm. Par Pythagore, la distance, d₁₋₂, entre les colonnes de la file intérieure des colonnes de la file extérieure est toujours inférieure à la distance, dₘᵢₙ. L'avantage de disposer les colonnes en quinconces sur deux files parallèles est que si la largeur réelle du passage donnant accès à l'intérieur de l'abri est défini par la distance dₘᵢₙ, l'observation de l'ouverture d'entrée par un prédateur se trouvant devant l'abri lui donnera l'impression que la largeur du passage est d'environ ½ d1 < dₘᵢₙ, et le dissuadera encore plus de tenter de pénétrer dans l'abri à la poursuite de sa proie (cf. Figures 1(a), 2(a) et 3(a)). La carrure moyenne d'un cormoran en position de plongée, c'est-à-dire avec les ailes repliées, est estimée à environ 160-180 mm. Si, par exemple, d1 = 200 mm et dₘᵢₙ = 160 mm (ce qui correspond à une distance, d₁₋₂, entre la file extérieure et la file intérieure d'environ 125 mm), le passage d'entrée aura une largeur réelle de dₘᵢₙ = 160 mm, ce qui arrêtera la plupart des prédateurs tels que des cormorans, mais en plus, la largeur apparente du passage d'entrée ne sera que de ½ d1 = 100 mm, ce qui découragera des oiseaux de plus petite taille comme des harles de s'aventurer contre cette muraille apparente de colonnes.

Afin de ménager une chambre intérieure de dimensions suffisantes pour permettre aux animaux qui s'y sont réfugiés de manoeuvrer, il est préféré que l'épaisseur du toit au niveau de la portion d'entrée, comprenant le bord d'entrée (2i) et la portion de la surface intérieure (2d) du toit supportant les colonnes (4b, 4f), soit sensiblement plus élevée que celle de la portion directement adjacente à ladite portion d'entrée, formant ainsi une sorte de paroi fermant partiellement la première ouverture d'entrée. Des exemples selon ce mode de réalisation sont illustrés aux Figures 2&3, où la différence d'épaisseur du toit est surtout visible aux Figures 2(c) et 3(c). Ce mode de réalisation permet également de diminuer la luminosité à l'intérieur de l'abri, que les animaux s'y réfugiant semblent particulièrement apprécier.

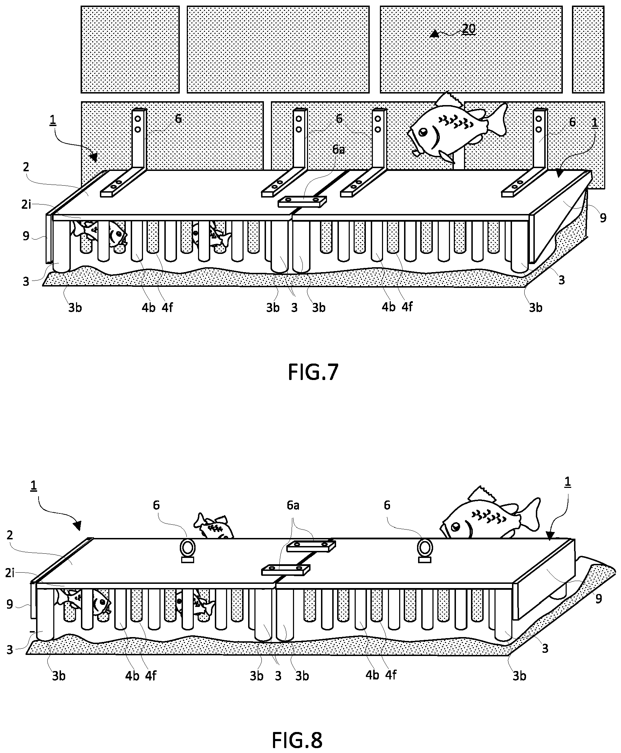

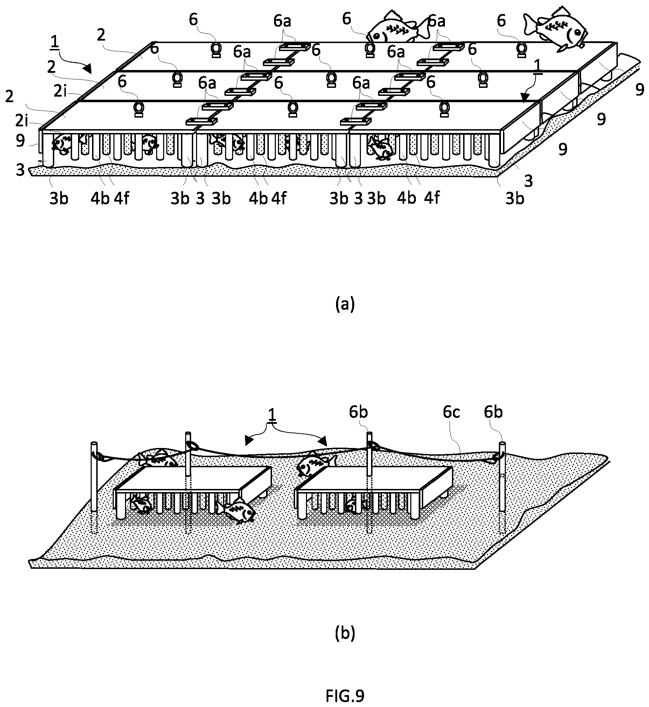

Un abri selon la présente invention peut se fixer à une paroi transversale (artificielle ou non) du bord d'un cours d'eau, plan d'eau, ou mer. De tels modes de réalisation sont représentés aux Figures 1 à 3, 5 et 7. Dans ce cas, le bord du toit opposé au bord d'entrée (2i) est de préférence rectiligne et est positionné contre la dite paroi transversale avec la base des pieds (3b) reposant sur le sol. L'abri est fixé dans cette position par des moyens de fixation (6) qui sont par exemple sous la forme de supports en « L » tels que représentés dans les Figures 1 à 3, 5 et 7, fixés d'une part à l'abri et, d'autre part, à la paroi transversale. De manière alternative, les moyens de fixation (6) peuvent comprendre une longue vis ou barre à mine (6b) s'enfonçant du toit dans le sol sur lequel est posé l'abri (cf. Figure 8 et 9(b)). Un anneau fixé au toit de l'abri, par exemple formant la tête d'une vis de fixation (6) peut faciliter le placement de l'abri au fond de l'eau à l'aide d'un treuil ou d'une grue (cf. Figures 8&9(a)).

Un abri fixé contre une paroi transversale ne requiert que deux pieds (3) tel que les variantes illustrées aux Figures 1, 2 et 7. Il est cependant possible de prévoir un troisième, voire un quatrième pied (3) définissant ainsi une seconde, voire une troisième ouverture d'entrée, tel qu'illustré à la Figure 3. Comme on le voit bien dans les Figures 1(c), 2(c), et 3(c), les côtés extérieurs latéraux de l'abri comprennent des ouvertures latérales (5) comprises entre la paroi transversale (20), le toit (2), le sol et lesdits pieds (3). Si ces ouvertures sont de dimensions trop importantes il convient de les obturer au moins partiellement afin de (a) empêcher l'entrée des prédateurs dans l'abri par de telles ouvertures latérales (5), et (b) de diminuer la force du courant à l'intérieur de l'abri. Comme la topologie du sol sur lequel peut être posé un tel abri peut varier énormément, il est difficile de restreindre les dimensions de cette ouverture de manière systématique lors de la construction de l'abri. Un exemple est donné à la Figure 3, où la taille de l'ouverture latérale (5) est réduite tout en laissant la possibilité d'accommoder la topographie du terrain. De manière alternative, des panneaux latéraux (9) amovibles peuvent être fixés sur les côtés extérieurs latéraux de l'abri reliant la paroi transversale aux pieds de l'abri, permettant d'obturer au moins partiellement lesdites ouvertures latérales (5). Un exemple de tels panneaux latéraux (9) est illustré aux Figures 7 à 9. L'avantage de tels panneaux latéraux (9) est qu'ils peuvent être dimensionnés en fonction de la topographie du terrain.

Si un abri posé contre une paroi transversale est exposé à un fort courant latéral, des sédiments risquent de s'accumuler à l'intérieur de l'abri, réduisant ainsi le volume de la chambre mise à disposition des animaux qui s'y sont réfugiés. Selon le type de sol et la force du courant, une telle accumulation de sédiments peut rapidement remplir tout l'espace disponible. Dans un tel cas, il est avantageux de munir l'abri d'une paroi latérale convexe (10) telle que représentée à la Figure 5, s'étendant transversalement à et au-delà du bord d'entrée de l'abri jusqu'à une extrémité libre. Des calculs d'hydrodynamique ont montré que, de manière optimale, l'extrémité libre de la paroi convexe .devrait être située à une distance telle que l'angle, a, formé par les segments reliant, d'une part, le premier et second pieds et, d'autre part, le premier pied et l'extrémité libre de la paroi latérale est compris entre 8 et 20°, de manière préférée entre 10 et 15°, où le premier pied est le pied le plus éloigné de ladite paroi latérale convexe (10). Grâce à une telle paroi latérale convexe (10) le courant (11) représenté à la Figure 5 par des flèches épaisses est dévié et évite l'ouverture d'entrée de l'abri, évitant ainsi l'accumulation incontrôlée de sédiments à l'intérieur de l'abri.

Dans une variante alternative de la présente invention, l'abri n'est pas fixé à une paroi transversale d'un cours d'eau mais posé directement sur le lit du cours d'eau ou fond d'un plan d'eau ou mer. Des exemples d'une telle variante sont représentés aux Figures 6, 8&9. Dans cette variante, l'abri comprend au moins trois pieds (3) distribués sur tout le périmètre du toit (2). L'abri peut comprendre plus de trois pieds, mais trois pieds permettent d'obtenir une stabilité optimale sur une grande variété de topographies de sols. Les trois pieds (ou plus) définissent trois (ou plus) ouvertures d'entrée de longueur L1, L1a, et L1b. Les trois (ou plus) ouvertures d'entrée sont pourvues de colonnes (4f, 4b) disposées sur deux files telles que discutées plus haut. L'abri de la Figure 6(a) comprend un toit circulaire et plan. Il est clair que le périmètre du toit peut avoir toute forme géométrique désirée selon l'application. Le toit peut être en forme de dôme comme représenté aux Figures 2&3 pour la variante fixée à un mur, afin d'offrir une chambre plus ample et sombre à l'intérieur de l'abri. L'abri peut être fixé au sol par une longue vis partant du toit et s'enfonçant dans le sol (cf. Figures 8&9). De manière alternative, l'abri peut être simplement posé à même le sol, et tenir en place par son propre poids. Il est possible de le lester en y accumulant des pierres sur le toit. La Figure 6(b) montre une variante originale, comprenant des pieds (33) et des colonnes (44b, 44f) semblables ou identiques aux pieds (3) et colonnes (4b, 4f) mais fixées à la surface supérieure (2u) du toit. Cette variante d'abri est simplement posée sur le fond d'un cours d'eau ou de mer soumis à de forts courants. Si le courant parvient à retourner l'abri, il retombe sur ses pieds (33) et peut servir à nouveau comme abri, la tête en bas. Ce genre d'abri s'intègre dans un milieu dynamique en constante mutation tout en maintenant ses fonctions d'abri intactes.

Un abri selon la présente invention est avantageusement utilisé comme module d'un assemblage réunissant plusieurs abris couplés côte à côte tel que représenté aux Figures 7 à 9. La Figure 7 représente un assemblage de deux abris placés l'un à côté de l'autre par une paroi latérale de chacun et fixés à un mur artificiel (20) par des moyens de fixation (6) en forme de « L ». Pour assurer une plus grande stabilité du système deux abris adjacents peuvent être fixés l'un à l'autre par des moyens de couplage (6a). De nombreuses solutions techniques de couplage (6a) sont connues de l'homme du métier et peuvent être choisies indifféremment dans le cadre de la présente invention selon les circonstances. La Figure 8 montre un assemblage semblable à celui de la Figure 7, mais posé à même le sol, loin de toute paroi transversale tel qu'un mur, socle d'éolienne, ou autres. Les abris sont alors préférablement fixés au sol au moyen de longues vis (6) fixées au toit (2) de chaque abri et s'enfonçant dans le sol. Dans la Figure 8, les vis se terminent avec un anneau qui peut être utile pour descendre l'abri au fond de l'eau à l'aide d'un treuil ou grue. Tel que représenté à la Figure 9(a), de très grands espaces intérieurs peuvent être obtenus en assemblant des abris côte à côte selon deux directions transversales. Tous les modules d'un tel assemblage peuvent être des abris selon l'invention, donnant un abri avec plusieurs chambres intérieures séparées par des colonnes (4f, 4b). Alternativement, les modules intérieurs peuvent être dépourvus de colonnes et seuls les modules formant le périmètre de l'assemblage sont selon la présente invention. Un tel assemblage forme alors une grand espace intérieur unique et protégé de l'assaut des prédateurs. Les possibilités sont multiples et permettent de s'adapter à des milieux aqueux et des types de faunes aquatiques très différents. Des abris ayant un toit rectangulaire sont illustrés à la Figure 9(a). Il est clair que des toits hexagonaux permettraient aussi de réaliser des assemblages d'abris intéressants en nid d'abeilles.

D'une manière alternative, des abris selon la présente invention peuvent être dispersés sur une surface tel que représenté à la Figure 9(b). Une manière simple et efficace de fixer un abris sur le fond d'un cours d'eau, plan d'eau ou mer soumis à des courants est de percer le toit d'un trou dans lequel on passe une vis ou une barre à mine (6b) qu'on enfonce solidement dans le sol. Afin d'entretenir ou réparer les abris et pour nettoyer l'intérieur des abris qui ont pu se colmater par des débris emportés par le courant, il peut être intéressant de fixer les abris de manière réversible, afin de pouvoir les retirer lorsque c'est nécessaire. Si le trou dans le toit est légèrement plus grand que le diamètre de la barre à mine, l'abri peut facilement être retiré de son emplacement en le soulevant verticalement jusqu'à ce qu'il soit désolidarisé de la barre (6b). De manière alternative, la vis ou barre à mine (6b) peut être retirée du sol pour libérer l'abri. Afin de solidariser les abris entre eux ainsi que de faciliter leur localisation au fond d'un cours d'eau, ils peuvent être reliés entre eux par un câble (6c) passant dans des mousquetons ou maillons rapides fixés aux barres à mine (6b) au travers de trous. Le câble peut être muni de boucles fermées permettant de fixer le mousqueton en un point du câble. Les extrémités du câble peuvent être fixées à des barres (6b) fixant un abri ou simplement plantés dans le sol, tel que représenté à la Figure 9(b).

Un abri selon la présente invention peut être constitué de différents matériaux, tels que le bois, le béton armé ou non, la pierre, le ciment, etc. Des bois autochtones résistants à l'eau tels que le robinier peuvent être avantageusement utilisés. Des polymères peuvent être utilisés également mais leur utilisation n'est pas préférée, car leur durabilité dans un milieu aqueux, parfois salin en mer, peut être insuffisante, et c'est un matériau qui ne s'intègre pas bien dans un milieu naturel. Les colonnes (4f, 4b) et/ou les pieds (3) peuvent être en métal. Selon la salinité et le pH du milieu aqueux dans lequel se trouve l'abri, des colonnes en aluminium, inox ou en acier comme par exemple des barres de renfort pour le béton, peuvent être utilisées en tenant compte de la vitesse d'oxydation et du prix.

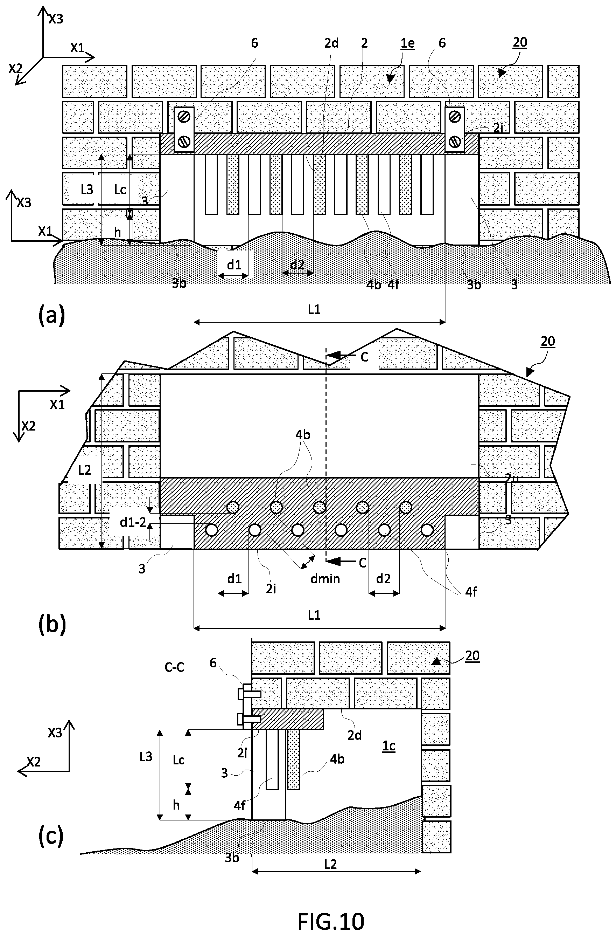

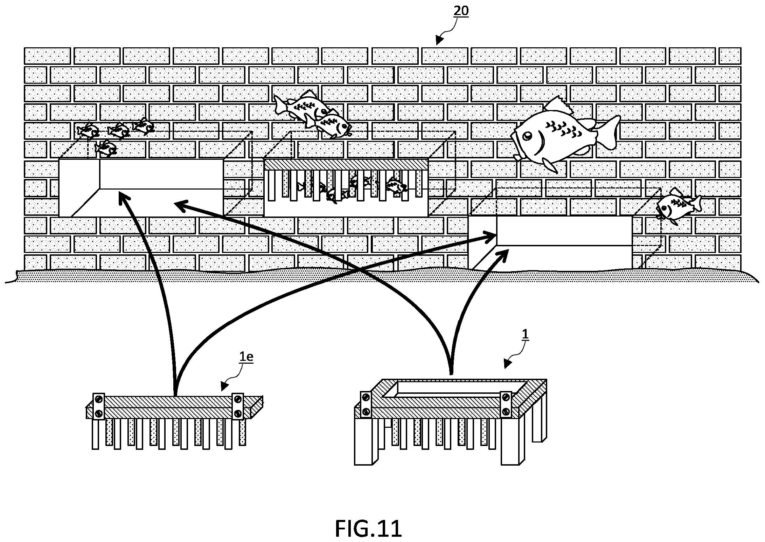

Dans une variante alternative, illustrée aux Figures 10 et 11, la chambre (1c) est définie par une cavité dans une paroi latérale (20) artificielle ou non et définissant une niche pourvue d'une ouverture d'entrée sur une surface extérieure de la paroi latérale. L'ouverture d'entrée est barrée par les colonnes 4f, 4b) telles que discutées plus haut. Comme illustré à la Figure 11, les colonnes (4f, 4b) peuvent être arrangées sur une structure complète (1), autoportante et semblable à celles discutées en rapport des Figures 1 à 9. L'abri peut donc simplement être inséré dans une niche aménagée dans une paroi latérale d'un cours d'eau, plan d'eau ou mer. Seules les restrictions sur la taille de toute ouverture sur le toit (2) ne s'appliquent pas ici, puisqu'une fois l'abri inséré dans la niche, le toit (2) de celui)-ci n'est plus accessible à la faune de taille supérieure à celle admise dans l'abri. L'abri est préférablement fixé dans la niche par des moyens (6) de fixation. Dans une deuxième variante, la niche elle-même définit le volume intérieur de l'abri, et les colonnes (4f, 4b) sont simplement montées sur un linteau formant une structure d'entrée (1^{e}) très simple et très légère. La structure d'entrée doit être fixée à l'entrée de la niche par des moyens (6) de fixation. Cette dernière variante est illustrée aux Figures 10 et 11, et a l'avantage d'être très économique et simple à réaliser. La niche peut se trouver au niveau du sol formant le fond du cours d'eau, plan d'eau ou mer ou au contraire, elle peut se trouver à hauteur intermédiaire de la paroi latérale, à une distance du sol.

Afin d'abriter des espèces de plus petite taille encore, leur offrant ainsi une protection de la faune ayant une taille permettant de passer à travers l'espace, dₘᵢₙ, séparant deux colonnes, le toit de l'abri peut être formé de deux ou plusieurs planches superposées séparées l'une de l'autre par un espace de préférence inférieur à dₘᵢₙ. Des petits poissons, crustacés et insectes trouvent ainsi un espace leur étant réservé.

Un abri selon la présente invention convient parfaitement pour être placé en eaux calmes ou en eaux agitées, le cas échéant, muni d'une paroi latérale convexe (10). Il peut être fixé contre une paroi transversale artificielle ou non, tel qu'une berge en béton, en pierres, ou en briques, verticale ou non, contre le socle d'une éolienne ou plate-forme off-shore, ou au milieu d'un cours d'eau ou plan d'eau sur la paroi d'un enrochement, etc. Il peut aussi être déposé directement sur le fond d'un cours d'eau, plan d'eau ou mer. Par la disposition des colonnes en quinconce barrant l'ouverture d'entrée de l'abri, la taille des animaux pouvant pénétrer dans l'abri est limitée physiquement par la distance minimale, dₘᵢₙ, entre les colonnes (4f) de la file extérieure et les colonnes (4b) les plus proches de la file intérieure et psychologiquement par la demi-distance, ½ d1 < dₘᵢₙ, entre deux colonnes (4f) de la file extérieure, car de face il n'est pas visible que les colonnes sont disposées sur deux files et semblent former un ligne unique deux fois plus dense qu'en réalité. L'aspect psychologique est particulièrement important pour des prédateurs volatils tels que les cormorans, puisque leur temps de résidence sous l'eau est limité et qu'ils n'ont pas toujours le temps d'investiguer de plus près sur la disposition réelle des colonnes.

## Revendications

1. Abri (1) pour la biodiversité aquatique et principalement pour la faune piscicole, comprenant une chambre (1c) définissant un volume intérieur et comprenant une ouverture d'entrée définie par des cotés définissant un périmètre ayant une largeur (L1) **caractérisé en ce que,** ladite ouverture d'entrée comprend des colonnes (4f, 4b) parallèles entre elles s'étendant chacune depuis un premier côté du périmètre de l'entrée jusqu'à une extrémité libre de chaque colonne, et arrangées sur une file extérieure (4f) et sur une file intérieure (4b), sensiblement parallèles l'une à l'autre et distribuées en quinconce sur toute la largeur (L1) de l'ouverture d'entrée, **en ce que,** chaque colonne a une longueur telle que son extrémité libre est à une distance (h) comprise entre 30 et 100 mm d'un côté opposé au premier coté, **et en ce que** chaque colonne (4f) arrangée sur la file extérieure est séparée des colonnes (4b) les plus proches arrangées sur la file intérieure d'une distance (dₘᵢₙ) comprise entre 10 et 200 mm.

2. Abri selon la revendication 1, comprenant :
(a) Un toit (2) comprenant une surface extérieure (2u) et une surface intérieure (2d), séparées l'une de l'autre par l'épaisseur du toit et comprenant des bords définissant un périmètre de toit, le dit toit étant dépourvu,
• Soit de toute ouverture,
• Soit de toute ouverture (2o) définie par un périmètre d'ouverture tel que les deux points de ce périmètre d'ouverture les plus éloignés l'un de l'autre définissent un segment de direction (Z1), et comprenant un segment (Z2) normal au segment de direction (Z1) et défini par une paire de points dudit périmètre d'ouverture ayant une longueur supérieure à 50 mm,
(b) Au moins un premier pied (3) et un second pied (3) s'étendant transversalement depuis, respectivement, une première zone et une deuxième zone de la surface intérieure (2d) du toit toutes deux adjacentes à un bord d'entrée (2i) du toit, le premier et second pieds ayant chacun une base apte à être posée sur un fond du cours d'eau ou plan d'eau et étant séparés l'un de l'autre au niveau de leur base (3b) de ladite largeur (L1), et définissant ainsi une première ouverture d'entrée,
(c) Les colonnes (4f, 4b) parallèles entre elles s'étendant chacune transversalement depuis une portion dite d'entrée de la surface intérieure du toit adjacente au bord d'entrée jusqu'à une extrémité libre de chaque colonne, et arrangées sur la file extérieure (4f) et sur la file intérieure (4b), sensiblement parallèles l'une à l'autre et distribuées en quinconce sur toute la longueur du bord d'entrée entre les premier et second pieds, et dans lequel :
• chaque colonne a une longueur telle que son extrémité libre est à une distance (h) comprise entre 30 et 100 mm du segment imaginaire reliant les bases (3b) des premier et deuxième pieds (3),
• Chaque colonne (4f) arrangée sur la file extérieure étant séparée des colonnes (4b) les plus proches arrangées sur la file intérieure d'une distance (dₘᵢₙ) comprise entre 10 et 200 mm.

3. Abri selon la revendication 2, dans lequel l'épaisseur du toit au niveau du bord d'entrée (2i) et de la première ouverture d'entrée est sensiblement plus élevée que celle de la portion du toit directement adjacente à ceux-ci, formant ainsi une sorte de paroi fermant partiellement l'ouverture d'entrée.

4. Abri selon les revendications 2 ou 3, dans lequel la distance, h, séparant chaque colonne du segment imaginaire reliant les bases des premier et deuxième pieds peut être variée afin de l'adapter à la topographie du sol sur lequel l'abri est posé entre le premier et le deuxième pied.

5. Abri selon la revendication 2, comprenant un troisième pied définissant avec le deuxième pied une seconde ouverture d'entrée munie de colonnes telles que définies pour la première ouverture d'entrée.

6. Abri selon la revendication 2, comprenant de plus des moyens de fixation (6) aptes à fixer l'abri à une paroi transversale (20) artificielle ou non d'un cours d'eau, plan d'eau ou en mer de sorte que la première ouverture soit accessible pour donner accès à la chambre (1c).

7. Abri selon les revendications 2 et 6 étant fixé à la paroi transversale (20) de sorte que les premier et deuxième pieds soient éloignés de ladite paroi et comprenant de plus des panneaux latéraux (9) fixés sur les côtés extérieurs latéraux de l'abri reliant la paroi transversale aux pieds de l'abri, permettant d'obturer au moins partiellement les ouvertures latérales (5) comprises entre la paroi transversale (20), le toit (2), le sol et lesdits pieds (3) en fonction de la topologie du sol sur lequel l'abri est posé.

8. Abri selon la revendication 2 et 6 ou 7, comprenant une paroi latérale convexe (10) s'étendant transversalement au, et au-delà du bord d'entrée de l'abri jusqu'à une extrémité libre située à une distance telle que l'angle, a, formé par les segments reliant, d'une part, le premier et second pieds et, d'autre part, le premier pied et l'extrémité libre de la paroi latérale est compris entre 8 et 20°, de manière préférée entre 10 et 15°, et où le premier pied (3) est le pied le plus éloigné de la paroi latérale (10).

9. Abri selon les revendications 2 et 5, dans lequel les trois pieds sont répartis à intervalles sensiblement réguliers le long du périmètre du toit, définissant une deuxième et une troisième ouvertures d'entrée entre les deuxième et troisième pieds et entre les troisième et premier pieds, respectivement, chacune des deuxième et troisième ouvertures d'entrée étant munies chacune de colonnes telles que définies pour la première ouverture d'entrée.

10. Abri selon la revendication 9, comprenant trois pieds et des colonnes réparties en quinconce sur deux files tels que définis à la revendication 9, s'étendant de la surface extérieure du toit.

11. Abri selon l'une quelconque des revendications précédentes, dans lequel chaque colonne (4f) arrangée sur la file extérieure est séparée des colonnes (4b) les plus proches arrangées sur la file intérieure d'une distance, dₘᵢₙ, comprise entre 50 et 175 mm, et de préférence entre 100 et 150 mm.

12. Abri selon la revendication 1, dans lequel la chambre (1c) est définie par une cavité dans une paroi latérale (20) artificielle ou non, la chambre ayant une ouverture d'entrée sur une surface extérieure de la paroi latérale.

13. Assemblage d'un premier et d'au moins un deuxième abris (1) selon l'une quelconque des revendications 2-11 en tant que dépendante de la revendication 2, placés côte-à-côte avec le toit (2) de l'un sensiblement au même niveau que le toit de l'autre et séparés l'un de l'autre par un espace inférieur à 20 mm entre les deux toits.

14. Assemblage selon la revendication 13, dans lequel le premier et au moins deuxième abris sont selon la revendication 5 comprenant chacun un bord latéral transversalement orienté par rapport au bord d'entrée (2i), et de géométrie telle que les deux abris peuvent être positionnés côte à côte avec ledit bord latéral (5) du premier abri adjacent audit bord latéral (5) du au moins deuxième abri sans laisser d'espace de plus de 20 mm entre les deux bords latéraux, et avec la première ouverture d'entrée de chacun des abris ayant sensiblement la même orientation.

15. Utilisation de colonnes (4f, 4b) afin de limiter physiquement la taille des animaux pouvant pénétrer à l'intérieur d'un abri (1) comprenant une ouverture d'entrée définie par des cotés définissant un périmètre qui a une largeur (L1), **caractérisé en ce que,** lesdites colonnes (4f, 4b) sont parallèles entre elles s'étendant chacune depuis un premier côté du périmètre de l'entrée jusqu'à une extrémité libre de chaque colonne, et arrangées sur une file extérieure (4f) et sur une file intérieure (4b), sensiblement parallèles l'une à l'autre et distribuées en quinconce sur toute la largeur (L1) de l'ouverture d'entrée, **en ce que,** chaque colonne a une longueur telle que son extrémité libre est à une distance (h) comprise entre 30 et 100 mm d'un coté opposé au premier coté, **et en ce que** chaque colonne (4f) arrangée sur la file extérieure est séparée des colonnes (4b) les plus proches arrangées sur la file intérieure d'une distance (dₘᵢₙ) comprise entre 10 et 200 mm.

## Patentansprüche

1. Unterstand (1) für die aquatische Artenvielfalt und in der Hauptsache für die Fischfauna, der eine Kammer (1c) umfasst, die einen Innenraum definiert, und eine Eingangsöffnung umfasst, die von Seiten definiert ist, die einen Umfang definieren, der eine Breite (L1) hat, **dadurch gekennzeichnet, dass** die Eingangsöffnung Säulen (4f, 4b), die zueinander parallel sind, umfasst, die sich jeweils von einer ersten Seite des Umfangs des Eingangs bis zu einem freien Ende jeder Säule erstrecken, und die auf einer äußeren Reihe (4f) und auf einer inneren Reihe (4b) eingerichtet sind, die zueinander im Wesentlichen parallel und im Zickzack auf der gesamten Breite (L1) verteilt sind, dass jede Säule eine Länge derart hat, dass ihr freies Ende in einem Abstand (h), der zwischen 30 und 100 mm liegt, einer Seite ist, die der ersten Seite gegenüber liegt, und dass jede Säule (4f), die auf der äußeren Reihe eingerichtet ist, von den Säulen (4b), die am nächsten liegen, die auf der inneren Reihe in einem Abstand (dₘᵢₙ), der zwischen 10 und 100 mm liegt, eingerichtet sind.

2. Unterstand nach Anspruch 1, der Folgendes umfasst:
(a) ein Dach (2), das eine äußere Oberfläche (2u) und eine innere Oberfläche (2d) umfasst, die voneinander durch die Stärke des Dachs getrennt sind und Ränder umfassen, die einen Dachumfang bilden, wobei das Dach
• entweder keine Öffnung,
• oder keine Öffnung (2o) hat, die von einem Öffnungsumfang derart definiert ist, dass die zwei Punkte dieses Öffnungsumfangs, die voneinander am weitesten entfernt sind, ein Segment mit Richtung (Z1) definieren und ein Segment (Z2) senkrecht zu dem Segment mit Richtung (Z1) umfassen,
und durch ein Paar von Punkten des Öffnungsumfangs definiert ist, der eine Länge größer als 50 mm hat,
(b) mindestens einen ersten Fuß (3) und einen zweiten Fuß (3), die sich quer jeweils ausgehend von einer ersten Zone und einer zweiten Zone der inneren Oberfläche (2d) des Dachs erstrecken, die beide zu einem Eingangsrand (2i) des Dachs benachbart sind, wobei der erste und der zweite Fuß jeweils eine Basis haben, die geeignet ist, auf einem Grund des Wasserlaufs oder der Wasserfläche abgestellt zu werden, und die voneinander im Bereich ihrer Basis (3b) um die Breite (L1) getrennt sind, und daher eine erste Eingangsöffnung definieren,
(c) die Säulen (4f, 4b), die zueinander parallel sind, sich jeweils quer ausgehend von einem Abschnitt, der Eingangsabschnitt genannt wird, der inneren Oberfläche des Dachs benachbart zu dem Eingangsrand bis zu einem freien Ende jeder Säule erstrecken, und auf der äußeren Reihe (4f) und auf der inneren Reihe (4b) im Wesentlichen parallel zueinander eingerichtet und im Zickzack auf der gesamten Länge des Eingangsrands zwischen dem ersten und dem zweiten Fuß verteilt sind, und wobei:
• jede Säule eine Länge derart hat, dass ihr freies Ende in einem Abstand (h), der zwischen 30 und 100 mm liegt, von dem imaginären Segment, das die Basen (3b) des ersten und zweiten Fußes (3) verbindet, liegt,
• jede Säule (4f), die auf der äußeren Reihe eingerichtet ist, von den Säulen (4b), die am nächsten auf der inneren Reihe eingerichtet sind, um einen Abstand (dₘᵢₙ), der zwischen 10 und 200 mm liegt, getrennt sind.

3. Unterstand nach Anspruch 2, wobei die Stärke des Dachs im Bereich des Eingangsrands (2i) und der ersten Eingangsöffnung im Wesentlichen größer ist als die des Abschnitts des Dachs, der zu diesen direkt benachbart ist, indem daher eine Art von Wand gebildet wird, die die Eingangsöffnung teilweise schließt.

4. Unterstand nach Anspruch 2 oder 3, wobei, der Abstand h, der jede Säule des imaginären Segments, das die Basen des ersten und zweiten Fußes verbindet, trennt, variiert werden kann, um die Topographie des Grunds, auf dem der Unterstand abgestellt ist, zwischen dem ersten und zweiten Fuß anzupassen.

5. Unterstand nach Anspruch 2, der einen dritten Fuß umfasst, der mit dem zweiten Fuß eine zweite Eingangsöffnung definiert, die mit Säulen wie denen, die für die erste Eingangsöffnung definiert sind, versehen ist.

6. Unterstand nach Anspruch 2, der außerdem Befestigungsmittel (6) umfasst, die geeignet sind, um den Unterstand an einer Querwand (20), die künstlich ist oder nicht, des Wasserlaufs, der Wasserfläche oder im Meer derart zu befestigen, dass die erste Öffnung zugänglich ist, um Zugang zu der Kammer (1c) zu bieten.

7. Unterstand nach den Ansprüchen 2 und 6, der an der Querwand (20) derart befestigt ist, dass der erste und der zweite Fuß von der Wand entfernt sind und außerdem Seitenplatten (9) umfassen, die auf den seitlichen äußeren Seiten des Unterstands, die die Querwand mit den Füßen des Unterstands verbinden, befestigt sind, die es erlauben, die seitlichen Öffnungen (5), die zwischen der Querwand (20), dem Dach (2), dem Grund und den Füßen (3) liegen, in Abhängigkeit von der Topologie des Grunds, auf dem der Unterstand abgestellt ist, mindestens teilweise zu verschließen.

8. Unterstand nach Anspruch 2 und 6 oder 7, der eine konvexe seitliche Wand (10) umfasst, die sich quer zu und über den Eingangsrand des Unterstands bis zu einem freien Ende erstreckt, das in einem Abstand derart liegt, dass der Winkel α, der von den Segmenten, die einerseits den ersten und den zweiten Fuß und andererseits den ersten Fuß und das freie Ende der seitlichen Wand verbinden, zwischen 8 und 20°, bevorzugt zwischen 10 und 15° beträgt, und wobei der erste Fuß (3) der Fuß ist, der von der seitlichen Wand (10) am weitesten entfernt ist.

9. Unterstand nach den Ansprüchen 2 und 5, wobei die drei Füße in im Wesentlichen regelmäßigen Intervallen entlang des Umfangs des Dachs verteilt sind, indem eine zweite und eine dritte Eingangsöffnung jeweils zwischen dem zweiten und dritten Fuß und zwischen dem dritten und ersten Fuß gebildet werden, wobei jede der zweiten und dritten Eingangsöffnung jeweils mit Säulen wie denen versehen ist, die für die erste Eingangsöffnung definiert sind.

10. Unterstand nach Anspruch 9, der drei Füße und Säulen umfasst, die im Zickzack auf zwei Reihen, wie in Anspruch 9 definiert, verteilt sind, die sich von der äußeren Oberfläche des Dachs erstrecken.

11. Unterstand nach einem der vorhergehenden Ansprüche, wobei jede Säule (4f), die auf der äußeren Reihe eingerichtet ist, von den Säulen (4b), die am nächsten auf der inneren Reihe eingerichtet sind, um einen Abstand dₘᵢₙ getrennt ist, der zwischen 50 und 175 mm und bevorzugt zwischen 100 und 150 mm liegt.

12. Unterstand nach Anspruch 1, wobei die Kammer (1c) von einem Hohlraum in einer seitlichen Wand (20), die künstlich ist oder nicht, definiert ist, wobei die Kammer eine Eingangsöffnung auf einer äußeren Oberfläche der seitlichen Wand hat.

13. Anordnung eines ersten und mindestens eines zweiten Unterstands (1) nach einem der Ansprüche 2 bis 11, abhängig von Anspruch 2, die nebeneinander mit dem Dach (2) der einen im Wesentlichen auf demselben Niveau wie das Dach der anderen platziert und voneinander durch einen Raum kleiner als 20 mm zwischen den zwei Dächern getrennt sind.

14. Anordnung nach Anspruch 13, wobei der erste und mindestens zweite Unterstand gemäß Anspruch 5 beschaffen sind, die jeweils einen Seitenrand umfassen, der in Bezug auf den Eingangsrand (2i) quer ausgerichtet ist und eine Geometrie derart hat, dass die zwei Unterstände Seite an Seite mit dem seitlichen Rand (5) des ersten Unterstands benachbart zu dem seitlichen Rand (5) des mindestens zweiten Unterstands positioniert werden können, ohne einen Raum von mehr als 20 mm zwischen den zwei Seitenrändern zu lassen, und wobei die erste Eingangsöffnung jedes der Unterstände im Wesentlichen dieselbe Ausrichtung hat.

15. Gebrauch von Säulen (4f, 4b), um physisch die Größe der Tiere einzuschränken, die in das Innere eines Unterstands (1) eindringen können, der eine Eingangsöffnung umfasst, die von Seiten definiert ist, die einen Umfang definieren, der eine Breite (L1) hat, **dadurch gekennzeichnet, dass** die Säulen (4f, 4b) zueinander parallel sind, indem sie sich jeweils von einer ersten Seite des Umfangs des Eingangs bis zu einem freien Ende jeder Säule erstrecken und auf einer äußeren Reihe (4f) und einer inneren Reihe (4b) eingerichtet sind, die zueinander im Wesentlichen parallel sind und im Zickzack auf der gesamten Breite (L1) der Eingangsöffnung verteilt sind, dass jede Säule eine Länge derart hat, dass ihr freies Ende in einem Abstand (h), der zwischen 30 und 100 mm liegt, von einer Seite, die der ersten Seite gegenüber liegt, ist, und dass jede Säule (4f), die auf der äußeren Reihe eingerichtet ist, von den Säulen (4b), die am nächsten liegen, die auf der inneren Reihe eingerichtet sind, um einen Abstand (dₘᵢₙ), der zwischen 10 und 200 mm liegt, getrennt ist.

## Claims

1. Shelter (1) for aquatic biodiversity, and mainly for fish life, featuring a chamber (1c) defining an inner space and including an inlet defined by sides delineating a perimeter of a width (L1), **characterised in that** said inlet features columns (4f, 4b) parallel to one another and each extending from a first side of the perimeter of the inlet to a free end of each column, and distributed on an outer row (4f) and an inner row (4b), substantially parallel to one another and arranged in a staggered distribution over the entire width (L1) of the inlet, **in that** each column has a length such that that the free end is at a distance (h), ranging from 30 to 100 mm, of a side opposite the first side, and **in that** each column (4f), arranged on the outer row is separated from the closest columns (4b) arranged on the inner row by a distance (dₘᵢₙ) ranging from 10 to 200 mm.

2. Shelter according to claim 1, including:
(a) A roof (2) featuring an outer surface (2u) and an inner surface (2d), separated from one another by the thickness of the roof and including sides that define the perimeter of the roof, where said roof does not feature,
• Either any aperture,
• Or any aperture (2o) defined by an opening perimeter such that the two points of the opening perimeter that are the most distant from one another define a segment in the direction (Z1) and include a segment (Z2) perpendicular to the direction (Z1) and defined by a pair of points of said opening perimeter with a length greater than 50 mm,
(b) At least one first foot (3) and one second foot (3) that extend transversally from, respectively, the first zone and the second zone of the inner surface (2d) of the roof, both being adjacent to an inlet side (2i) of the roof, the first and second roofs each featuring a base that can be installed at the bottom of a watercourse and where both are separated from one another at their base (3b) by a distance (L1), thereby defining a first inlet,
(c) Columns (4f, 4b) parallel to one another and each extending transversally from an inlet portion of the inner surface of the roof adjacent to the inlet side to a free end of each column, and distributed on the outer row (4f) and on the inner row (4b), roughly parallel to one another and arranged as a quincunx on the entire length of the inlet side, between the first foot and the second foot, and in which:
• each column features a length such that its free end is at a distance (h), ranging from 30 to 100 mm, from the imaginary segment connecting the bases (3b) of the first foot and the second foot (3),
• Each column (4f) distributed on the outer row is separated from the closest columns (4b) arranged on the inner row by a distance (dₘᵢₙ) ranging from 10 to 200 mm.

3. Shelter according to claim 2, in which the thickness of the roof at the level of the inlet side (2i) and of the first inlet is significantly greater than the thickness of the roof section directly adjacent to these, thereby forming a wall that partially closes the inlet.

4. Shelter according to claims 2 or 3, in which the distance h, separating each column of the imaginary segment connecting the bases of the first and second feet can be changed so as to adapt to the topography of the ground on which the shelter is installed between the first foot and the second foot.

5. Shelter according to claim 2, including a third foot that defines, with the second foot, a second inlet featuring columns similar to those defined for the first inlet.

6. Shelter according to claim 2, additionally including fastening means (6) used to secure the shelter to a transversal wall (20), artificial or not, of a watercourse, a lake or a sea, so that the first inlet is accessible and provides access to the chamber (1c).

7. Shelter according to the claims 2 and 6, attached to the transversal wall (20) so that the first and second feet are distant from said wall, and including side panels (9) attached on the outer sides of the shelter connecting the transversal wall to the feet of the shelter, enabling to partially obstruct the side opening (5) included between the transversal wall (20), the roof (2) and the ground and said feet (3) depending on the topology of the ground on which the shelter is installed.

8. Shelter according to claim 2 and 6 or 7, featuring a convex side wall (10) extending transversally to and beyond the inlet of the shelter to a free end located at a distance such that the angle α formed by the segments connecting, on one hand, the first foot and the second foot and, on the other hand, the first foot and the free end of the side wall ranges from 8 to 20°, and preferentially from 10 to 15°, and where the first foot (3) is the foot that is the furthest away from the side wall (10).

9. Shelter according to claims 2 and 5, in which the three feet are distributed at roughly equal distance along the perimeter of the roof, defining a second and a third inlet between the second and third feet, and between the third and first feet, respectively, whereby each of these second and third outlets feature columns such as defined for the first inlet.

10. Shelter according to claim 9 featuring three feet and columns arranged as a quincunx along two line as defined in claim 9, extending from the outer surface of the roof.

11. Shelter according to any of the above claims, in which each column (4f) arranged on the outer row is separated from the closest columns (4b) arranged on the inner row by a distance dₘᵢₙ ranging from 50 to 175 mm, and preferentially between 100 and 150 mm.

12. Shelter according to claim 1, in which the chamber (1c) is defined by a cavity in the side wall (20), artificial or not, and where the chamber features an inlet on the outer surface of the side wall.

13. Assembly of a first and at least a second shelter (1) according to any of the claims 2-11, and dependent of claim 2, arranged side by side with the roof (2) of one roughly at the same level as the roof of the other, and separated from one another by a distance of less than 20 mm between the two roofs.

14. Assembly according to claim 13, in which the first and at least second shelter are achieved according to claim 5, each including a side wall transversally oriented with respect to the inlet side (2i), and featuring a geometry such that the two shelters can be positioned side by side with said side (5) of the first shelter adjacent to said side (5) of at least a second shelter, without leaving a space greater than 20 mm between both sides, and with the first inlet of each shelter featuring roughly the same orientation.

15. Use of columns (4f, 4b) to physically limit the size of animals able to penetrate inside the shelter (1), featuring an inlet defined by the sides that delineate a perimeter with a width (L1), **characterised in that** said columns (4f, 4b) are parallel to one another and extend transversally from the first side of the inlet perimeter to a free end of each column, and distributed on an outer row (4f) and on an inner row (4b), roughly parallel to one another, and arranged as a quincunx on the entire length (L1) of the inlet side, between the first foot and the second foot, **in that** each column features a length such that its free end is at a distance (h), ranging from 30 to 100 mm of a side facing the first side, and **in that** each column (4f) is arranged on the outer row and separated from the closest columns (4b) distributed along the inner row. by a distance (dₘᵢₙ) ranging from 10 and 200 mm.
